# EUROPÄISCHE PATENTSCHRIFT

(11) **EP 3 492 319 B1**
(45) Veröffentlichungstag und Bekanntmachung des Hinweises auf die Patenterteilung: **08.07.2020**
(21) Anmeldenummer: 18208745.2
(22) Anmeldetag: 28.11.2018
(51) Int. Cl.: B60R 7/04

(54) **ABDECKUNG MIT EINER EINRICHTUNG ZUR UNTERSTÜTZUNG DER VERLAGERUNG**
COVER WITH A DEVICE FOR SUPPORTING THE DISPLACEMENT
COUVERCLE DOTÉ D'UN DISPOSITIF PRENANT EN CHARGE LE DÉPLACEMENT

(30) Priorität: 29.11.2017 DE 102017128265; 27.11.2018 DE 102018129937
(43) Veröffentlichungstag der Anmeldung: 05.06.2019
(73) Patentinhaber: Dr. Schneider Kunststoffwerke GmbH, 96317 Kronach-Neuses (DE)
(72) Erfinder: ENDRES, Gerhard, 95336 Mainleus (DE); Buss, Alexander, 95352 Marktleugast (DE)

(56) Entgegenhaltungen:
- DE-A1-102014 112 758
- DE-B3- 10 325 105
- US-A1- 2015 191 125

## Beschreibung

Es wird eine Abdeckung mit einer Einrichtung zur Unterstützung der Verlagerung beschrieben, welche mindestens eine Führung und eine verlagerbare Abdeckung aufweist, wobei zusätzlich eine Federeinrichtung vorgesehen ist, welche die Verlagerung unterstützt.

Eine solche Abdeckung kann beispielsweise bei Kraftfahrzeugen verwendet werden, um Aufnahmefächer zu verschließen. Die Abdeckung mit der Einrichtung kann beispielsweise Teil einer Aufbewahrungseinrichtung sein. Die Aufbewahrungseinrichtung kann zur Aufnahme von Gegenständen, wie beispielsweise Getränkebehältern, vorgesehen sein. Weiterhin kann die Aufbewahrungseinrichtung auch andere Gegenstände, wie beispielsweise elektronische Geräte (zum Beispiel Smartphones) oder Münzen, Karten und Schreibutensilien, aufnehmen.

### Stand der Technik

Es sind verschiedene Abdeckungen für Aufnahmefächer bekannt, wobei die Abdeckung unter Zuhilfenahme einer Federeinrichtung verschiebbar ist.

DE 10 2014 112 758 A1 offenbart eine Einrichtung zum Öffnen und Schließen eines Faches, wobei die Einrichtung eine Rollfeder aufweist, die mit einer Abdeckung gekoppelt ist. Die Abdeckung ist entlang einer Führung bewegbar, wobei in der geöffneten Stellung des Faches die Rollfeder gespannt ist. Beim Schließen des Faches wird die Abdeckung entlang der Führung verschoben, wobei über die Rollfeder eine gleichbleibende Bedienkraft über den gesamten Verschiebeweg bereitgestellt werden soll.

Ferner offenbart DE 103 25 105 B3 eine Abdeckung gemäß dem Oberbegriff vom Anspruch 1 mit einem betätigbaren Deckel für den Innenraum eines Fahrzeugs, wobei der Deckel bei seinem Verbringen von einer geschlossenen in die offene Stellung eine Feder spannt. Ein Verschließen des Deckels kann dann über die geschlossene Feder erfolgen.

Aus dem Stand der Technik sind jedoch nur Einrichtungen bekannt, die ein vollständiges Schließen des Aufnahmefaches ermöglichen. Eine teileweise Verlagerung ist hierüber nicht möglich. Darüber hinaus führt eine Dämpfungseinrichtung, wie sie beispielsweise in DE 103 25 105 B3 vorgesehen sein kann, dazu, dass sich ruckartige Bewegungen einstellen. Diese werden als unangenehm empfunden.

### Aufgabe

Es besteht daher die Aufgabe, eine Abdeckung anzugeben, welche eine alternative Lösung zu den aus dem Stand der Technik bekannten Einrichtungen bietet, und wobei haptische Rückmeldungen durch Dämpfungseinrichtungen nicht spürbar sind und ein Schließen der Abdeckung in einem letzten Wegabschnitt automatisch erfolgt.

### Lösung

Die vorstehend genannte Aufgabe wird durch eine Abdeckung mit einer Einrichtung zur Unterstützung der Verlagerung gelöst, mindestens aufweisend eine Führung, einen Schieber und eine Federeinrichtung, wobei der Schieber entlang der Führung verschiebbar und mit der Federeinrichtung verbunden ist , wobei
- die Einrichtung zur Unterstützung der Verlagerung eine sich mindestens partiell entlang der Führung ersteckende Führungskulisse aufweist,
- der Schieber eine Mitnehmeranordnung und mindestens einen Führungszapfen aufweist,
- der mindestens eine Führungszapfen in der Führungskulisse verschiebbar gelagert ist und die Führungskulisse einen ersten Endabschnitt aufweist, der eine Raststellung des Schiebers definiert,
- der Schieber in der Raststellung über die Federeinrichtung gespannt ist,
- die Abdeckung über die Mitnehmeranordnung mindestens partiell verlagerbar ist,
- der Schieber über die Abdeckung in die Raststellung und aus der Raststellung verbringbar ist, und
- die Ausbildung der Führungskulisse ermöglicht, dass der Schieber nach dem Erreichen der Raststellung im ersten Endabschnitt nicht mehr in Kontakt mit dem Mitnehmer bleibt.

Beim Verbringen aus einer geschlossenen in die offene Stellung wird der Schieber durch die Abdeckung mitgezogen. Der Schieber gleitet über den Führungszapfen in der Führungskulisse und gelangt in den ersten Endabschnitt. Wird die Abdeckung weiter verlagert, um beispielsweise ein Aufnahmefach vollständig freizugeben, so erfolgt keine weitere Verlagerung des Schiebers mehr, welcher in der Raststellung verharrt und damit auch kein weiteres Spannen der Federeinrichtung. Die weitere Verlagerung der Abdeckung, beispielsweise durch ein Verschieben, kann deshalb mit einem geringeren Kraftaufwand erfolgen, da eine Entkopplung von dem Schieber und der Federeinrichtung nach dem Überfahren dieser Raststellung erfolgt ist.

Wird die Abdeckung von der geöffneten Stellung in die geschlossene Stellung verbracht, so erfolgt nach dem Zurücklegen einer Wegstrecke eine Kopplung der Abdeckung mit der Mitnehmeranordnung des Schiebers, sodass der Schieber aus der Raststellung heraus bewegt und durch die gespeicherte Energie der Federeinrichtung entlang der Führungskulisse verschoben wird. Bei dem Verschieben des Schiebers nimmt dieser die Abdeckung mit, sodass die Abdeckung auf ihrem letzten Wegstück automatisch durch den Schieber mitgezogen wird.

Die Abdeckung ist daher über die Mitnehmeranordnung des Schiebers mindestens partiell verlagerbar. Die Ausbildung der Führungskulisse gibt dabei vor, inwieweit ein automatisches Verlagern der Abdeckung zum Verbringen in die geschlossene Stellung erfolgen kann.

Die Abdeckung ermöglicht vorteilhaft ein manuelles Öffnen, beispielsweise eines Aufnahmefaches, durch eine Verlagerung der Abdeckung. Nach Überfahren einer bestimmten Wegstrecke erfolgt das Öffnen des Aufnahmefaches auch mit einem geringeren Kraftaufwand, da der Schieber in seiner Raststellung verharrt und damit von der Abdeckung entkoppelt wird. Anschließend kann die Abdeckung beispielsweise nur ein Stück weit verfahren werden, um ein Aufnahmefach nicht vollständig zu verschließen. Dies kann manuell erfolgen, ohne dass ein Eingreifen des Schiebers durchgeführt wird. Erst nach Überfahren der Raststellung des Schiebers gelangt die Abdeckung mit dem Schieber in Kontakt, sodass allein durch den Schieber die Abdeckung auf ihrem letzten Wegstück automatisch verschlossen werden kann.

Die Abdeckung mit einer solchen Einrichtung ermöglicht ein automatisches Zuziehen der Abdeckung auf einem letzten Wegstück des Schiebeweges und bietet zudem eine hochwertige Anmutung, da weniger Kontakt eines Benutzers mit der Abdeckung zum Zuziehen erforderlich ist. Darüber hinaus werden auch eventuell auftretende, haptisch wahrnehmbare Rückmeldungen aufgrund der Verlagerung der Abdeckung durch den Benutzer nicht wahrgenommen. Ein "Rattern" wie aus dem Stand der Technik bekannt, ist für einen Benutzer daher nicht wahrnehmbar.

Die Abdeckung kann zusätzlich eine Bremseinrichtung aufweisen, welche eine Verlagerung des Schiebers durch die Federeinrichtung dämpft. Die Bremseinrichtung kann auch als Dämpfungseinrichtung verstanden werden. Diese verhindert ein Zuschnappen der Abdeckung auf dem letzten Weg und stellt im Wesentlichen ein homogenes, gleichmäßiges Schließen bereit.

Die Bremseinrichtung kann im Bereich der Führung angeordnet sein. Hierdurch ist eine dämpfende Wirkung möglich, die in Richtung der Verlagerung der Abdeckung und in Bewegungsrichtung des Schiebers erfolgt. Dämpfungseinrichtungen mit Zahnrädern bewirken in der Regel eine Dämpfung orthogonal zur Bewegungsrichtung, wodurch störende Bewegungen (Rattern) leichter wahrgenommen werden können.

Die Bremseinrichtung kann einen Bremszylinder aufweisen. Der Bremszylinder kann einen mit einem Gas, beispielsweise Luft, gefüllten Zylinder aufweisen, der mit dem Schieber verbunden ist oder an dem Schieber anliegt. Ein Verbringen der Abdeckung aus der geschlossenen in die geöffnete Stellung kann sowohl ein Spannen der Federeinrichtung als auch eine Kraft zum Verformen bzw. Verlagern des Bremszylinders erforderlich machen. Erfolgt eine Verlagerung der Abdeckung über den Schieber so wirkt der Bremszylinder der Verlagerung entgegen und stellt eine homogene Verlagerung bereit, die ohne ein Zutun einer Bedienperson erfolgt.

Die Abdeckung kann einen Mitnehmer und die Mitnehmeranordnung kann einen Anlagezapfen mit einer Schräge aufweisen. Die Ausbildung des Mitnehmers kann verschiedenartig sein. So kann der Mitnehmer beispielsweise einen Stift oder eine Leiste aufweisen, wobei sich die Leiste im Wesentlichen orthogonal zur Verlagerungsrichtung der Abdeckung erstreckt. Die Mitnehmeranordnung kann beispielsweise zwei Anlagezapfen aufweisen. Der Anlagezapfen mit der Schräge stellt sicher, dass beim Verbringen der Abdeckung aus der geöffneten in die geschlossene Stellung ein Überfahren des Mitnehmers erfolgen kann, bis dieser an einem ersten Anlagezapfen anliegt. Anschließend wird die Abdeckung manuell über einen Benutzer um ein Stück weiter verschoben, wobei eine Verlagerung des Schiebers entlang der Führungskulisse erfolgt. Der Schieber ändert dabei seine Ausrichtung, sodass der zweite Anlagezapfen mit der Schräge angehoben wird und dessen gegenüberliegende Anlagefläche in Kontakt mit dem Mitnehmer der Abdeckung kommt. Anschließend befindet sich der Schieber in seiner entriegelten Stellung und verfährt entlang der Führungskulisse aufgrund der in der Federeinrichtung gespeicherten Energie. Der Mitnehmer ist dann in einem Mitnehmerabschnitt zwischen dem ersten Anlagezapfen und dem zweiten Anlagezapfen des Schiebers gelagert.

Wird die Abdeckung aus der geschlossenen Stellung wieder in die geöffnete Stellung verbracht, so wird der zweite Anlagezapfen über den Mitnehmer der Abdeckung entlang der Führungskulisse verschoben, bis der mindestens eine Führungszapfen in den Abschnitt der Führungskulisse gelangt, welcher die Raststellung definiert. Dabei erfolgt neben einer Verlagerung des Schiebers auch eine Änderung der Ausrichtung, wobei ein Ende des Schiebers gegenüber seiner Position im restlichen Bereich der Führungskulisse abgesenkt wird. Dies ermöglicht ein Überfahren der Raststellung des Schiebers und eine Entkopplung der Abdeckung von dem Schieber.

Die Führungskulisse kann einen im Wesentlichen parallel zur Verlagerungsrichtung der Abdeckung verlaufenden ersten Abschnitt und einen im Wesentlichen orthogonal zum ersten Abschnitt verlaufenden zweiten Abschnitt aufweisen, welcher die Raststellung aufweist. Die Raststellung befindet sich am Ende des zweiten Abschnitts. Beim Verlagern des Schiebers entlang der Führungskulisse erfolgt ein Absenken des Schiebers nachdem der mindestens eine Führungszapfen in den zweiten Abschnitt gelangt, welcher sich orthogonal zum ersten Abschnitt erstreckt.

Anstelle einer rein orthogonalen Anordnung können bei der hierin beschriebenen Einrichtung auch davon abweichende Ausrichtungen vorgesehen sein. Wesentlich ist dabei jedoch, dass ein Absenken des Schiebers im Bereich der Raststellung auftritt, sodass eine Entkopplung der Abdeckung von dem Schieber beim Überfahren dieser Raststellung möglich ist und eine Kopplung des Schiebers mit der Abdeckung erfolgt, wenn diese die Raststellung wieder überfährt.

Die Federeinrichtung kann mindestens eine Zugfeder aufweisen. Eine Zugfeder ist beispielsweise mit einem Verbindungshaken des Schiebers gekoppelt und an einem anderen Ende mit einem weiteren Haken oder einer Aufnahme der Führung. Die Zugfeder erstreckt sich in der Richtung der Führung und kann parallel zum Bremszylinder verlaufen. Eine Zugfeder bietet auf einfache Weise ein Spannen des Schiebers und vereinfacht den Aufbau der Einrichtung.

Bei der Abdeckung erstrecken sich die Zugfeder, der Bremszylinder und die Verlagerungsrichtung der Abdeckung sowie des Schiebers in einer Richtung, sodass die Funktion der Einrichtung zum Unterstützen der Verlagerung sichergestellt wird und es zu keinem Verkanten oder einem Blockieren kommen kann.

Ein zweiter Endabschnitt der Führungskulisse kann einen entspannten Zustand des Schiebers definieren, in welchem die Abdeckung geschlossen ist. Der zweite Endabschnitt kann dabei zusätzlich einen gegenüber der Führungskulisse leicht abgesetzten Bereich aufweisen, in dem eine Arretierung erfolgt. Dieser abgesetzte Abschnitt weist in weiteren Ausführungsformen eine geringere Erstreckung als der zweite Abschnitt der Führungskulisse auf, in welchem sich die Raststellung befindet. In weiteren Ausführungsformen kann auch ein solcher zweiter Abschnitt ein Absenken des Schiebers in ähnlicher Weise zu einem Absenken im zweiten Abschnitt bewirken, da ein Mitführen des Schiebers beim Verbringen der Abdeckung aus der geschlossenen Stellung in die geöffnete Stellung durch einen Kontakt des Mitnehmers der Abdeckung über den zweiten Anlagezapfen erfolgt. Es steht damit ein Anlagezapfen auf Höhe des Mitnehmers bereit, um die Funktion des Mitführens des Schiebers durch die Abdeckung sicherzustellen.

Die Führung kann in einem Gehäuse einer Aufbewahrungseinrichtung angeordnet und die Abdeckung zum Verschließen eines Aufnahmefaches ausgebildet sein. Die Führung kann insbesondere integraler Bestandteil einer Wand oder einer Seitenwand des Gehäuses sein. Beispielsweise umfasst das Aufnahmefach Aufnahmen für Getränkebehälter.

Die Aufbewahrungseinrichtung kann auch mindestens zwei Einrichtungen zum Unterstützen der Verlagerung der Abdeckung aufweisen, die sich beispielsweise im Bereich der das Aufnahmefach begrenzenden Seitenwände befinden.

Die Wegstrecke zum Öffnen des Aufnahmefaches kann dabei größer sein als die Wegstrecke des Schiebers zwischen dem ersten Endabschnitt und dem zweiten Endabschnitt, wodurch eine manuelle Verlagerung der Abdeckung aus der geschlossenen in die geöffnete Stellung möglich ist und das Verbringen der Abdeckung in die geöffnete Stellung nach dem Überfahren der Raststellung einfacher möglich ist, weil eine Entkopplung von dem Schieber und damit der Federeinrichtung und dem Bremszylinder erfolgt.

Darüber hinaus ermöglicht die Ausgestaltung ein manuelles Verschließen des Aufnahmefaches zu einem Teil, ohne dass die Abdeckung mit dem Schieber in Eingriff kommt. Erst nach Überfahren der Raststellung gelangt die Abdeckung mit dem Schieber in Eingriff und es erfolgt ein automatisches Verschließen des Aufnahmefaches durch die Abdeckung aufgrund der in der Federeinrichtung gespeicherten Energie.

Weitere Vorteile, Merkmale sowie Ausgestaltungsmöglichkeiten ergeben sich aus der nachfolgenden Figurenbeschreibung von nicht einschränkend zu verstehenden Ausführungsbeispielen.

### Kurzbeschreibung der Zeichnungen

In den Zeichnungen zeigt:
- Fig. 1: eine perspektivische Darstellung einer Aufbewahrungseinrichtung;
- Fig. 2: eine Explosionsdarstellung einer Einrichtung zur Unterstützung der Verlagerung einer Abdeckung der Aufbewahrungseinrichtung von Fig. 1;
- Fig. 3: eine perspektivische Darstellung der Einrichtung von Fig. 2 bei einer geschlossenen Abdeckung;
- Fig. 4: eine weitere perspektivische Darstellung der Einrichtung von Fig. 2 bei einer geschlossenen Abdeckung;
- Fig. 5: eine perspektivische Darstellung der Einrichtung von Fig. 2 bei einer geöffneten Abdeckung;
- Fig. 6: eine weitere perspektivische Darstellung der Einrichtung von Fig. 2 bei einer geöffneten Abdeckung;
- Fig. 7: eine schematische Draufsicht auf die Aufbewahrungseinrichtung von Fig. 1;
- Fig. 8: eine Schnittansicht entlang der Linie A-A der Aufbewahrungseinrichtung von Fig. 7 mit einer geschlossenen Abdeckung; und
- Fig. 9: eine Schnittansicht entlang der Linie A-A der Aufbewahrungseinrichtung von Fig. 7 mit einer teilweise geöffneten Abdeckung.

In den Zeichnungen mit gleichen Bezugszeichen versehene Bestandteile entsprechen im Wesentlichen einander, sofern nichts anderes angegeben ist. Darüber hinaus wird darauf verzichtet Bestandteile zu zeigen und zu beschreiben, welche nicht wesentlich zum Verständnis der hierin offenbarten technischen Lehre sind.

### Ausführliche Beschreibung eines Ausführungsbeispiels

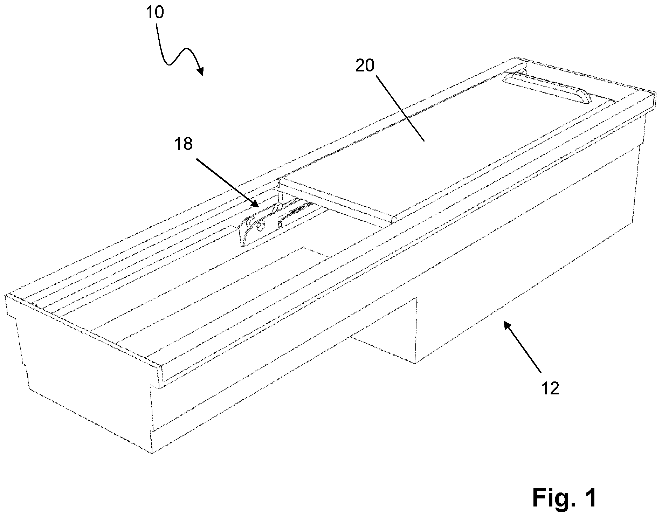

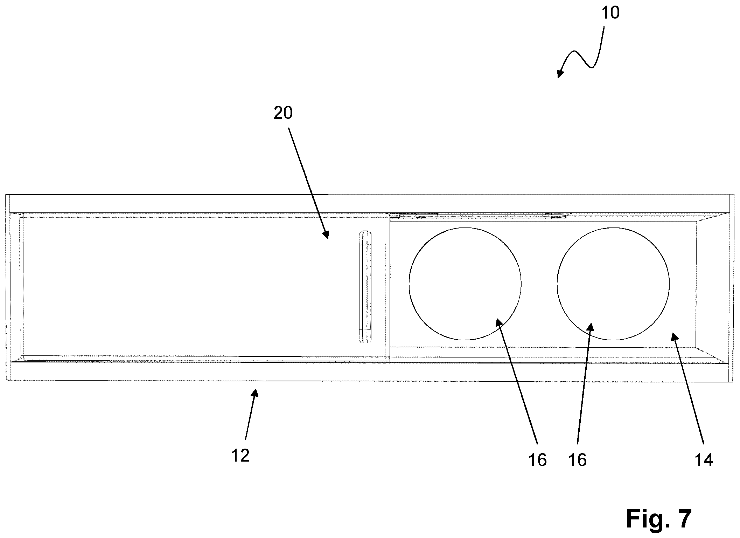

Fig. 1 zeigt eine perspektivische Darstellung einer Aufbewahrungseinrichtung 10. Die Aufbewahrungseinrichtung 10 weist ein Gehäuse 12 auf. In einem vorderen Abschnitt des Gehäuses 12 ist ein Aufnahmefach 14 ausgebildet, welches zwei Getränkebehälteraufnahmen 16 (siehe Fig. 7) aufweist. Die Aufbewahrungseinrichtung 10 weist zusätzlich eine Abdeckung 20 auf, die entlang von gegenüberliegenden Seitenwänden des Gehäuses 12 verschoben werden kann. Die Abdeckung 20 dient zum Verschließen des Aufnahmefaches 14. In Fig. 1 ist die geschlossene Stellung der Aufbewahrungseinrichtung 10 gezeigt, wobei die Abdeckung 20 das Aufnahmefach 14 verschließt.

Das Gehäuse 12 und eine Tragstruktur der Abdeckung 20 bestehen aus Kunststoff und können daher in einem Spritzgussprozess in hoher Stückzahl kostengünstig hergestellt werden.

Auch die weiteren Komponenten der Aufbewahrungseinrichtung 10, wie beispielsweise der Rahmen 30 und der Schieber 70, können aus Kunststoff bestehen und in einem Spritzgussprozess gefertigt werden.

Auf der Tragstruktur der Abdeckung 20 kann eine Dekorschicht aufgebracht werden. Die Dekorschicht kann beispielsweise eine Holzoberfläche aufweisen oder eine Kunststoffoberfläche umfassen, die beispielsweise eine Holzstruktur imitiert. Auch andere Strukturen können über eine auf die Abdeckung 20 aufgebrachte Oberflächenschicht oder Folie aufgebracht sein.

Die Aufbewahrungseinrichtung 10 der hierin gezeigten Ausführungsform ist in einer Mittelkonsole eines Fahrzeugs angeordnet und dient zur Aufnahme von Getränkebehältern. Wenn keine Getränkebehälter in das Aufnahmefach 14 bzw. die Getränkebehälteraufnahmen 16 eingesetzt sind, wird das Aufnahmefach 14 über die Abdeckung 20 verschlossen. In der vollständig geöffneten Stellung der Abdeckung 20 sind beide Getränkebehälteraufnahmen 16 zugänglich. Die Abdeckung 20 kann jedoch auch nur teilweise verlagert werden, um nur eine Getränkebehälteraufnahme 16 zugänglich zu machen.

Die Aufbewahrungseinrichtung 10 weist zusätzlich zwei Einrichtungen 18 auf, die sich an den gegenüberliegenden Seitenwänden des Gehäuses 12 erstrecken und zur Unterstützung der Verlagerung der Abdeckung 20 vorgesehen sind. Die Einrichtungen 18 ermöglichen es insbesondere, die Abdeckung 20 auf dem letzten Wegstück zum vollständigen Verschließen des Aufnahmefachs 14 automatisch zu verlagern. Das Öffnen der Abdeckung 20 erfolgt manuell über einen Griff oder eine andere Einrichtung, mittels welcher eine Bedienperson die Abdeckung 20 greifen und entlang der Seitenwände aus der in Fig. 1 gezeigten Stellung in eine zurückgezogene Stellung verbringen kann. Bei dem Verschieben der Abdeckung 20 um eine Wegstrecke S₂ werden die Schieber 70 um eine entsprechende Wegstrecke S₂ verschoben. Wird die Abdeckung 20 weiter verschoben, erfolgt kein weiteres Verschieben der Schieber 70, sodass das vollständige Öffnen des Aufnahmefachs 14 mit einem geringeren Kraftaufwand erfolgen kann.

Beim Schließen der Abdeckung 20 wird diese über einen Benutzer in die entgegengesetzte Richtung verschoben, wobei nach dem Überfahren einer Raststellung die Abdeckung 20 automatisch verschoben und in die vollständig geschlossene Stellung verbracht wird.

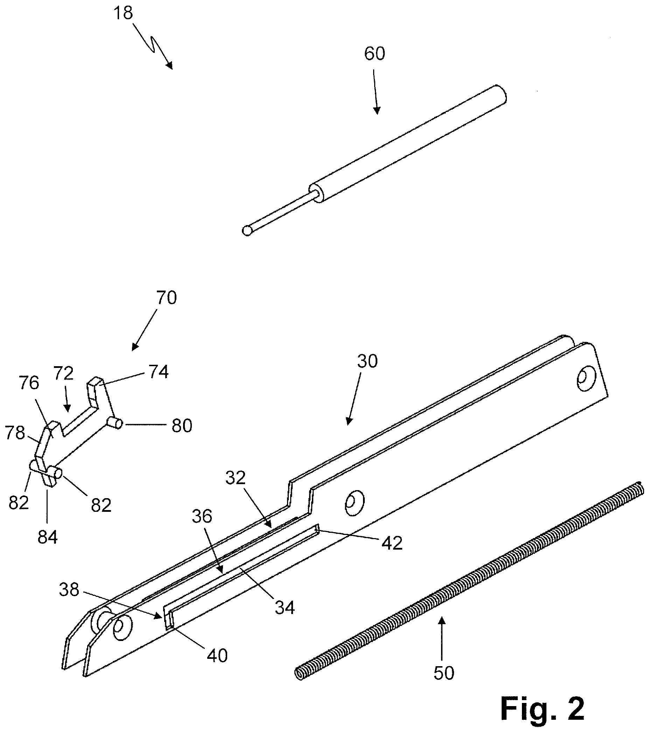

Fig. 2 zeigt eine Explosionsdarstellung der Einrichtung 18 zur Unterstützung der Verlagerung der Abdeckung 20 der Aufbewahrungseinrichtung 10 von Fig. 1. Die Einrichtung 18 weist einen Rahmen 30, eine Zugfeder 50, einen Bremszylinder 60 und einen Schieber 70 auf. Die Einrichtung 18 stellt sicher, dass die Verlagerung der Abdeckung 20 auf dem letzten Abschnitt des Schiebewegs automatisch erfolgt.

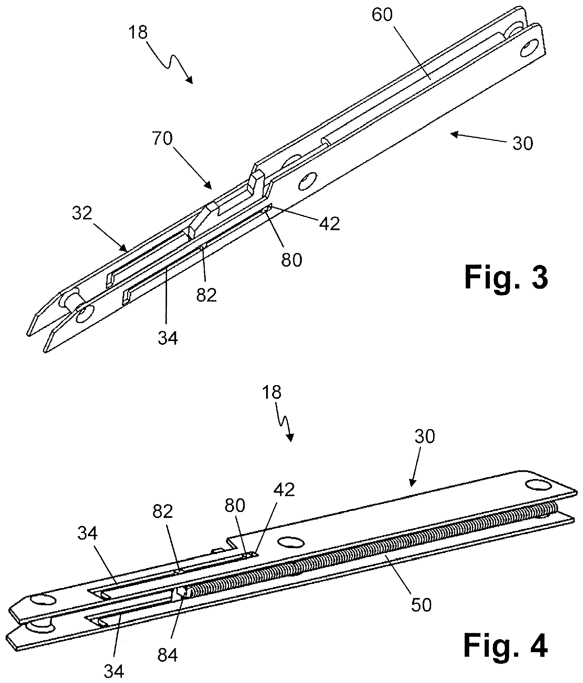

Der Rahmen 30 weist einen vorderen Abschnitt auf, in dem der Bremszylinder 60 aufgenommen ist (siehe Fig. 3). Zusätzlich weist der Rahmen 30 einen Abschnitt mit einer Führung 32 auf. Die Führung 32 dient für einen Mitnehmer 22, der an der Unterseite der Abdeckung 20 angeordnet ist. Da die Abdeckung 20 um einen weiteren Abschnitt verschoben werden kann als der Schieber 70, erstreckt sich die Führung 32 innerhalb des Gehäuses 12 weiter nach hinten, sodass eine größere Verlagerung der Abdeckung 20 als die Verlagerung der Schieber 70 erfolgen kann. Der hintere Abschnitt der Führung kann durch das Gehäuse 12 gebildet werden. Der Rahmen 30 weist zusätzlich zwei gegenüberliegende Führungskulissen 34 auf, in welchen Führungszapfen 80 und 82 des Schiebers 70 aufgenommen sind. Die Führungskulisse 34 weist einen ersten Abschnitt 36 und einen zweiten Abschnitt 38 auf. Der erste Abschnitt 36 erstreckt sich parallel zur Führung 32, wobei der zweite Abschnitt 38 sich orthogonal zum ersten Abschnitt 36 erstreckt. Am ersten Endabschnitt 40 des zweiten Abschnitts 38 ist die Raststellung des Schiebers 70 definiert. Der zweite Endabschnitt 42 definiert die vollständig geschlossene Position der Abdeckung 20.

Die Zugfeder 50 ist mit einem Verbindungshaken 84 an einem ersten Ende und an einem zweiten Ende über einen weiteren Haken in einem vorderen Abschnitt des Rahmens 30 verbunden. Eine Verlagerung des Schiebers 70 entlang der Führungskulisse 34 führt daher zu einem Spannen der Zugfeder 50, wobei die Zugfeder 50 gespannt ist, wenn sich der Schieber 70 in der Raststellung im ersten Endabschnitt 40 befindet.

Der Bremszylinder 60 ist in dem vorderen Abschnitt des Rahmens 30 angeordnet und wirkt einer Verlagerung des Schiebers 70 beim Zurückfahren der Abdeckung 20 aus der geöffneten Stellung in die geschlossene Stellung entgegen. Der Bremszylinder 60 weist einen vorderen Anlagebereich auf, der mit der Rückseite des ersten Anlagezapfens 74 des Schiebers 70 in Kontakt steht. Der Bremszylinder 60 muss daher nicht dauerhaft mit dem Schieber 70 verbunden sein. Wird der Schieber 70 von dem zweiten Endabschnitt 42 in Richtung des ersten Endabschnitts 40 verlagert, so dehnt sich der vordere Abschnitt des Bremszylinders 60 aus und wird durch den inneren Gasdruck herausgedrückt. Es erfolgt damit auch eine Unterstützung der Verlagerung des Schiebers 70. Wird der Schieber 70 über die in der Zugfeder 50 gespeicherten Energie aus der Raststellung im ersten Endabschnitt 40 in Richtung des zweiten Endabschnitts 42 verlagert, drückt der erste Anlagezapfen 74 gegen den vorderen Abschnitt des Bremszylinders 60, wobei dieser in den Zylinder hineingedrückt wird und eine Komprimierung des darin befindlichen Gases bewirkt. Der Bremszylinder 60 stellt damit eine Dämpfung der Bewegung des Schiebers 70 und damit der Abdeckung 20 bereit. Hierüber erfolgt eine homogene Verlagerung der Abdeckung 20 auf dem letzten Abschnitt des Schiebewegs.

Der Schieber 70 weist wie bereits angegeben die Führungszapfen 80 und 82 auf, die in den gegenüberliegenden Führungskulissen 34 verschiebbar gelagert sind. Zusätzlich weist der Schieber 70 einen Mitnehmerabschnitt 72 auf, der zwischen dem ersten Anlagezapfen 74 und einem zweiten Anlagezapfen 76 ausgebildet ist. Der Mitnehmerabschnitt 72 ist so ausgebildet, dass der Mitnehmer 22 im Wesentlichen spielfrei aufgenommen werden kann. Befindet sich die Abdeckung 20 in der vollständig geschlossenen Position oder in einer nur teilweise geöffneten Stellung, so befindet sich in dem Mitnehmerabschnitt 72 der Mitnehmer 22 der Abdeckung 20. Der erste Anlagezapfen 74 und der zweite Anlagezapfen 76 dienen daher zum Mitführen des Mitnehmers 22 und damit der Abdeckung 20. Die Ausbildung der Führungskulisse 34 ermöglicht es, dass der Schieber 70 nach dem Erreichen der Raststellung im ersten Endabschnitt 40 nicht mehr in Kontakt mit dem Mitnehmer 22 bleibt. In diesem Bereich befinden sich die gegenüberliegenden Führungszapfen 82 im ersten Endabschnitt 40, wodurch der Schieber 70 im Bereich des zweiten Anlagezapfens 76 abgesenkt ist. Der Mitnehmer 22 kann daher weiter verfahren werden, ohne dass dieser mit dem Schieber 70 gekoppelt ist.

Die Ausbildung der Schräge 78 am zweiten Anlagezapfen 76 ermöglicht ein einfaches Überfahren des zweiten Zapfens 76, ohne dass es zu einem Verkanten kommt, wenn die Abdeckung 20 aus der vollständig oder einer teilweise geöffneten Stellung in die geschlossene Stellung verbracht wird und dabei die Raststellung überfährt. Anschließend gelangt der Mitnehmer 22 in Kontakt mit dem ersten Anlagezapfen 74 und schiebt diesen entlang der Führungskulisse 34 soweit mit, bis der Abschnitt des Schiebers 70 mit dem zweiten Anlagezapfen 76 aus dem zweiten Abschnitt 38 der Führungskulisse 34 herausbewegt worden ist und damit der Schieber 70 wieder seine ursprüngliche Position einnimmt. Anschließend drückt der zweite Anlagezapfen 76 gegen den Mitnehmer 22 und bewirkt durch die in der Zugfeder 50 gespeicherte Energie ein automatisches Verlagern der Abdeckung 20.

Fig. 3 zeigt eine perspektivische Darstellung der Einrichtung 18 von Fig. 2 bei einer geschlossenen Abdeckung 20.

Fig. 4 zeigt eine weitere perspektivische Darstellung der Einrichtung 18 von Fig. 2 bei einer geschlossenen Abdeckung 20 von unten mit Blick auf den Rahmen 30. In der geschlossenen Stellung der Abdeckung 20 befindet sich der Schieber 70 in einer solchen Position, in welcher die gegenüberliegenden Führungszapfen 80 sich im zweiten Endabschnitt 42 befinden. Die Zugfeder 50 ist in diesem Zustand entspannt oder um ein geringes Maß gespannt. Der vordere Abschnitt des Bremszylinders 60 liegt an dem ersten Anlagezapfen 74 an. Es wird darauf hingewiesen, dass die Dämpfung der Bewegung über den Bremszylinder 60 die Verlagerung des Schiebers 70 durch die Zugfeder 50 lediglich dämpfen aber nicht vollständig unterbinden soll. Daher sind die Komponenten Zugfeder 50 und Bremszylinder 60 entsprechend aufeinander abzustimmen und in Hinblick auf die Funktion des automatischen Schließens auf dem letzten Abschnitt des Verschiebewegs der Abdeckung 20 zu bestimmen. Darüber hinaus ist das Gewicht der Abdeckung 20 zu berücksichtigen.

In der in den Fig. 3 und 4 gezeigten Stellung erstreckt sich der Schieber 70 im Wesentlichen parallel zum ersten Abschnitt 36 der Führungskulisse 34.

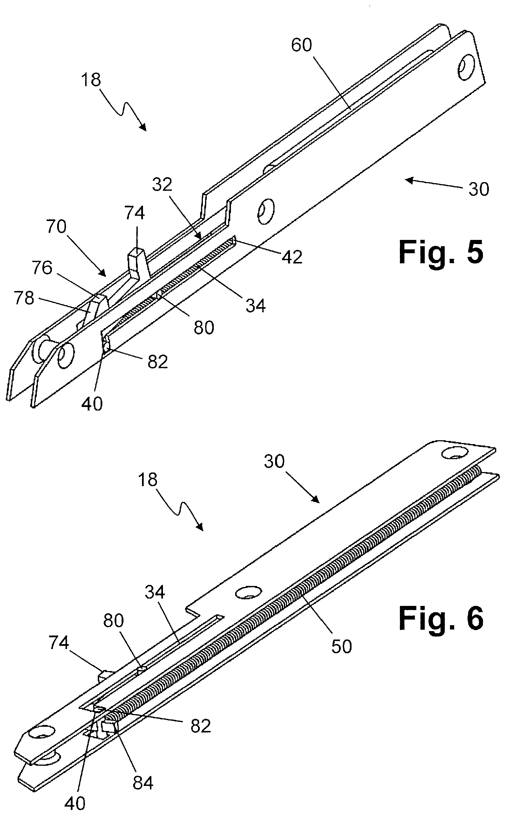

Fig. 5 zeigt eine perspektivische Darstellung der Einrichtung 18 von Fig. 2 bei einer geöffneten Abdeckung 20. Fig. 6 zeigt eine weitere perspektivische Darstellung der Einrichtung 18 von Fig. 2 bei einer geöffneten Abdeckung 20. In diesem Zustand ist der Schieber 70 über die Abdeckung 20 und den Mitnehmer 22 entlang der Führungskulisse 34 soweit verlagert worden, bis sich die gegenüberliegenden Führungszapfen 82 im ersten Endabschnitt 40 befinden. In einem solchen Zustand befindet sich der Schieber 70 in einer Raststellung. Der Abschnitt des Schiebers 70 mit dem zweiten Anlagezapfen 76 ist gegenüber der in den Fig. 3 und 4 gezeigten Stellung abgesenkt. Dies ermöglicht ein Weiterfahren der Abdeckung 20 und des Mitnehmers 22, ohne dass es zu einer weiteren Verlagerung des Schiebers 70 bzw. zu einem Blockieren durch den zweiten Anlagezapfen 76 kommen würde. D. h. die Abdeckung 20 kann weiter verlagert werden, ohne dass der Schieber 70 weiter verlagert wird. Dementsprechend kann die weitere Verlagerung der Abdeckung 20 mit einem geringeren Kraftaufwand erfolgen, wobei in weiteren Ausführungsformen der Bremszylinder 60 die zum Spannen der Zugfeder 50 erforderliche Kraft bei der Verlagerung der Abdeckung 20 zusammen mit dem Schieber 70 reduzieren oder eliminieren kann. Hierüber kann das Bediengefühl zum Verschieben besonders angenehm gestaltet werden, da die Kraft zum Verschieben im Wesentlichen konstant gehalten wird.

Wird die Abdeckung 20 wieder in die geschlossene Stellung verbracht, so erfolgt ein Überfahren der Raststellung des Schiebers 70, wobei der Mitnehmer 22 gegen den ersten Anlagezapfen 74 drückt und diesen sowie den Schieber 70 ein Stück weit mitführt. Dabei gelangen die Führungszapfen 82 in den ersten Abschnitt 36 der Führungskulisse 34, wobei ein Anheben des zweiten Anlagezapfens 76 erfolgt und dieser schließlich an dem Mitnehmer 22 anliegt. Der Schieber 70 befindet sich dann in einer entriegelten Stellung und drückt aufgrund der Federspannung durch die Zugfeder 50 die Abdeckung 20 automatisch in die vollständig geschlossene Stellung, ohne dass es einer manuellen Verlagerung durch eine Bedienperson bedarf. Die automatische Verlagerung des Schiebers 70 bewirkt damit auch eine Verlagerung der Abdeckung 20.

Fig. 7 zeigt eine schematische Draufsicht auf die Aufbewahrungseinrichtung 10 von Fig. 1. Der Aufnahmeraum 14 weist zwei Getränkebehälteraufnahmen 16 auf, die sich hintereinander in Richtung des Verschiebewegs der Abdeckung 20 befinden. In einer vollständig geöffneten Stellung der Abdeckung 20 liegen beide Getränkebehälteraufnahmen 16 frei. Befindet sich die Abdeckung 20 in einer Zwischenstellung, wobei der Mitnehmer 22 beispielsweise sich im Wesentlichen kurz vor der Raststellung des Schiebers 70 befindet, so liegt nur eine Getränkebehälteraufnahme 16 frei.

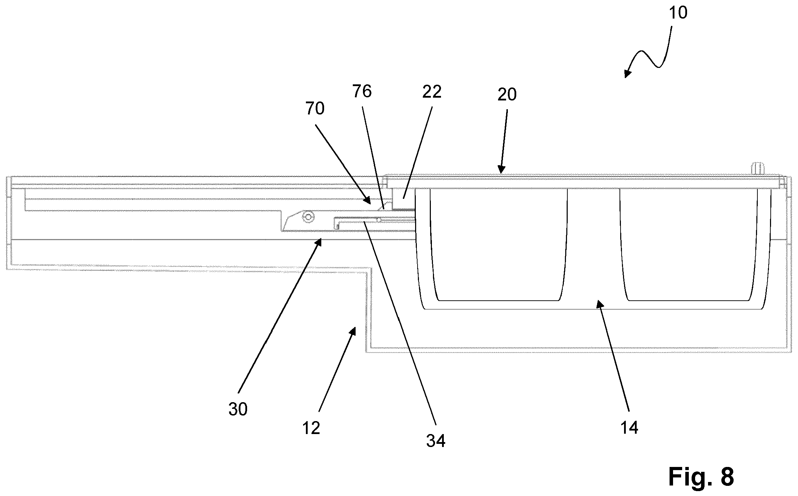

Fig. 8 zeigt eine Schnittansicht entlang der Linie A-A der Aufbewahrungseinrichtung 10 von Fig. 7 mit einer geschlossenen Abdeckung 20. Der Mitnehmer 22 befindet sich im Mitnehmerabschnitt 72 zwischen dem ersten Anlagezapfen 74 und dem zweiten Anlagezapfen 76. Erfolgt eine Verlagerung der Abdeckung 20 mit Blick auf die Darstellung von Fig. 8 nach links, so wird der Schieber 70 über den zweiten Anlagezapfen 76 und dem Mitnehmer 22 ebenfalls nach links entlang der Führungskulisse 34 verlagert.

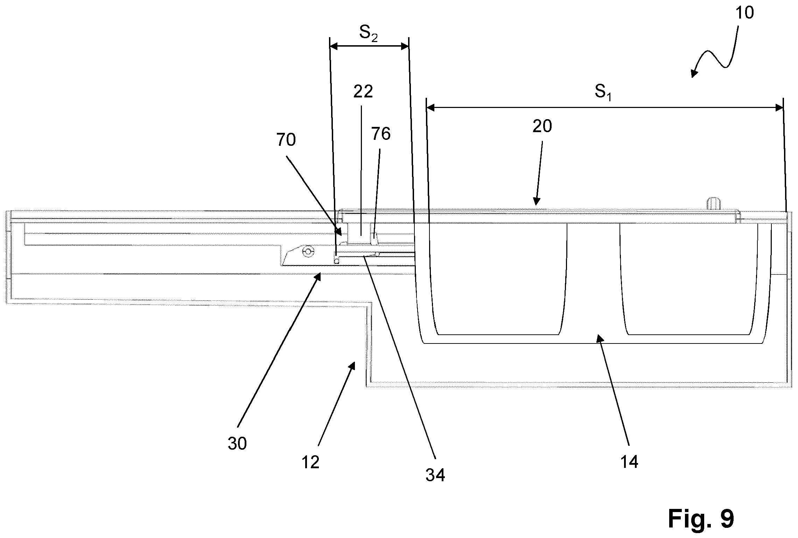

Fig. 9 zeigt eine Schnittansicht entlang der Linie A-A der Aufbewahrungseinrichtung 10 von Fig. 7 mit einer teilweise geöffneten Abdeckung 20. Nachdem die Abdeckung 20 und damit der Schieber 70 um eine Wegstrecke S₂ verschoben wurden, gelangen die gegenüberliegenden Führungszapfen 82 in den ersten Endabschnitt 40. Dabei erfolgt ein Absenken des Abschnitts des Schiebers 70 mit dem zweiten Anlagezapfen 76, sodass der Mitnehmer 22 weiter nach links verlagert werden kann, ohne dass der Schieber 70 mitgezogen wird. Es ist daher möglich, das Aufnahmefach 14 vollständig zu öffnen, ohne dass der Schieber 70 über die gesamte Wegstrecke S₁ zum Öffnen des Aufnahmefachs 14 mitgezogen wird.

Fig. 9 zeigt einen teilweise geöffneten Zustand der Abdeckung 20, wobei diese weiter nach links verschoben werden kann, bis die Abdeckung 20 an einem linken Ende ankommt. In der vollständig geöffneten Stellung der Abdeckung 20 hat diese die Wegstrecke S₁ zurückgelegt und das komplette Aufnahmefach 14 ist zugänglich.

Um nur einen Teil des Aufnahmefachs 14 freizulegen, damit beispielsweise nur in die vordere Getränkebehälteraufnahme 16 ein Getränkebehälter eingesetzt werden kann, ist die Abdeckung 20 manuell verschiebbar. Um die Abdeckung 20 in die vollständig geschlossene Stellung zu überführen, muss eine Bedienperson die Abdeckung 20 weiter in Richtung der geschlossenen Stellung bewegen, bis der Mitnehmer 22 die Raststellung des Schiebers 70 überfährt. Der Mitnehmer 22 überfährt den zweiten Anlagezapfen 76, da dieser sich in einer abgesenkten Position befindet. Anschließend gelangt der Mitnehmer 22 in Anlage mit dem ersten Anlagezapfen 74 und bewirkt durch eine weitere Verlagerung der Abdeckung 20 ein Anheben des Schiebers 70 in dem Bereich mit dem zweiten Anlagezapfen 76. Je weiter der erste Anlagezapfen 74 durch den Mitnehmer 22 verlagert wird, desto mehr wird der Abschnitt mit dem zweiten Anlagezapfen 76 angehoben, bis die Führungszapfen 82 in den ersten Abschnitt 36 der Führungskulisse 34 gelangen. Anschließend liegt der zweite Anlagezapfen 76 an dem Mitnehmer 22 an. Sobald die Führungszapfen 82 aus dem zweiten Abschnitt 38 herausgeführt und in den ersten Abschnitt 36 der Führungskulisse 34 gelangt sind, erfolgt aufgrund der Zugfeder 50 eine Verlagerung der Schieber 70 nach rechts. Da der Mitnehmer 22 sich dann im Mitnehmerabschnitt 72 zwischen dem ersten Anlagezapfen 74 und dem zweiten Anlagezapfen 76 befindet, wird die Abdeckung 20 über den Schieber 70 mitgezogen. Das Schließen der Abdeckung 20 im letzten Abschnitt des Schiebewegs um die Wegstrecke S₂ erfolgt daher automatisch.

In der geschlossenen Stellung der Abdeckung 20 kann ein unabsichtliches Öffnen dadurch verhindert werden, dass die Führungskulisse 34 im zweiten Endabschnitt 42 einen ähnlich zum zweiten Abschnitt 38 ausgebildeten abgesenkten Abschnitt aufweist, in welchen die Führungszapfen 80 aufgenommen werden. Darüber hinaus oder alternativ dazu kann die Spannung der Zugfeder 50 die Abdeckung 20 in der geschlossenen Stellung halten.

Wie eingangs bereits beschrieben, weist die Aufbewahrungseinrichtung 10 zwei Einrichtungen 18 auf, die sich an den gegenüberliegenden Seitenwänden des Gehäuses 12 erstrecken. Dadurch wird die homogene Verlagerung der Abdeckung 20 weiter unterstützt, da es zu keinem Blockieren durch ein Verkanten kommen kann.

In weiteren nicht dargestellten Ausführungsformen kann eine Aufbewahrungseinrichtung auch nur eine Einrichtung 18 aufweisen, wobei sich diese beispielsweise im Wesentlichen mittig zu einer Abdeckung erstreckt und sich links und rechts der Einrichtung Aufnahmefächer befinden.

### Bezugszeichenliste

- 10: Aufbewahrungseinrichtung
- 12: Gehäuse
- 14: Aufnahmefach
- 16: Getränkebehälteraufnahme
- 18: Einrichtung
- 20: Abdeckung
- 22: Mitnehmer
- 30: Rahmen
- 32: Führung
- 34: Führungskulisse
- 36: Abschnitt
- 38: Abschnitt
- 40: Endabschnitt
- 42: Endabschnitt
- 50: Zugfeder
- 60: Bremszylinder
- 70: Schieber
- 72: Mitnehmerabschnitt
- 74: Anlagezapfen
- 76: Anlagezapfen
- 78: Schräge
- 80: Führungszapfen
- 82: Führungszapfen
- 84: Verbindungshaken
- S₁: Wegstrecke
- S₂: Wegstrecke

## Patentansprüche

1. Abdeckung mit einer Einrichtung (18) zur Unterstützung der Verlagerung, mindestens aufweisend eine Führung (32), einen Schieber (70) und eine Federeinrichtung, wobei der Schieber (70) entlang der Führung (32) verschiebbar und mit der Federeinrichtung verbunden ist, **dadurch gekennzeichnet, dass**
- die Einrichtung (18) zur Unterstützung der Verlagerung eine sich mindestens partiell entlang der Führung (32) erstreckende Führungskulisse (34) aufweist,
- der Schieber (70) eine Mitnehmeranordnung und mindestens einen Führungszapfen (80; 82) aufweist,
- der mindestens eine Führungszapfen (80; 82) in der Führungskulisse (34) verschiebbar gelagert ist und die Führungskulisse (34) einen ersten Endabschnitt (40) aufweist, der eine Raststellung des Schiebers (70) definiert,
- der Schieber (70) in der Raststellung über die Federeinrichtung gespannt ist,
- die Abdeckung (20) über die Mitnehmeranordnung mindestens partiell verlagerbar ist,
- der Schieber (70) über die Abdeckung (20) in die Raststellung und aus der Raststellung verbringbar ist, und
- die Ausbildung der Führungskulisse (34) ermöglicht, dass der Schieber (70) nach dem Erreichen der Raststellung im ersten Endabschnitt (40) nicht mehr in Kontakt mit dem Mitnehmer (22) bleibt.

2. Abdeckung nach Anspruch 1, aufweisend eine Bremseinrichtung, welche eine Verlagerung des Schiebers (70) durch die Federeinrichtung bremst.

3. Abdeckung nach Anspruch 2, wobei die Bremseinrichtung im Bereich der Führung (32) angeordnet ist.

4. Abdeckung nach Anspruch 2 oder 3, wobei die Bremseinrichtung einen Bremszylinder (60) aufweist.

5. Abdeckung nach einem der Ansprüche 1 bis 4, wobei die Abdeckung (20) einen Mitnehmer (22) und die Mitnehmeranordnung einen Anlagezapfen (76) mit einer Schräge (78) aufweist.

6. Abdeckung nach einem der Ansprüche 1 bis 5, wobei die Führungskulisse (34) einen im Wesentlichen parallel zur Verlagerungsrichtung der Abdeckung (20) verlaufenden ersten Abschnitt (36) und einen im Wesentlichen orthogonal zum ersten Abschnitt (36) verlaufenden zweiten Abschnitt (38) aufweist, welcher die Raststellung aufweist.

7. Abdeckung nach einem der Ansprüche 1 bis 6, wobei die Federeinrichtung mindestens eine Zugfeder (50) aufweist.

8. Abdeckung nach einem der Ansprüche 1 bis 7, wobei ein zweiter Endabschnitt (42) der Führungskulisse (34) einen entspannten Zustand des Schiebers (70) definiert, in welchem die Abdeckung (20) geschlossen ist.

9. Abdeckung nach Anspruch einem der Ansprüche 1 bis 8, wobei die Führung (32) in einem Gehäuse (12) einer Aufbewahrungseinrichtung (10) angeordnet und die Abdeckung (20) zum Verschließen eines Aufnahmefachs (14) ausgebildet ist.

10. Abdeckung nach Anspruch 9, wobei die Wegstrecke (S₁) zum Öffnen des Aufnahmefachs (14) größer ist als die Wegstrecke (S₂) des Schiebers (70) zwischen dem ersten Endabschnitt (40) und dem zweiten Endabschnitt (42).

## Claims

1. Cover with a device (18) for assisting displacement, at least comprising a guide (32), a slider (70) and a spring device, wherein the slider (70) is displaceable along the guide (32) and is connected with the spring device, **characterised in that**
- the device (18) for assisting displacement comprises a guide gate (34) extending at least partly along the guide (32),
- the slider (70) comprises an entrainer arrangement and at least one guide pin (80; 82),
- the at least one guide pin (80; 82) is displaceably mounted in the guide gate (34) and the guide gate (34) has a first end section (40) which defines a detent setting of the slider (70),
- the slider (70) is stressed in the detent setting by way of the spring device,
- the cover (20) is at least partly displaceable by way of the entrainer arrangement,
- the slider (70) can be brought by way of the cover (20) into and out of the detent setting and
- the construction of the guide gate (34) makes it possible for the slider (70) after reaching the detent setting in the first end section (40) to no longer remain in contact with the entrainer (22).

2. Cover according to claim 1, comprising a brake device which brakes displacement of the slider (70) by the spring device.

3. Cover according to claim 2, wherein the brake device is arranged in the region of the guide (32).

4. Cover according to claim 2 or 3, wherein the brake device comprises a brake cylinder (60).

5. Cover according to any one of claims 1 to 4, wherein the cover (20) comprises an entrainer (22) and the entrainer arrangement comprises a contact pin (76) with a chamfer (78).

6. Cover according to any one of claims 1 to 5, wherein the guide gate (34) comprises a first section (36), which extends substantially parallel to the displacement direction of the cover (20), and a second section (38), which extends substantially orthogonally to the first section (36) and which has the detent setting.

7. Cover according to any one of claims 1 to 6, wherein the spring device comprises at least one tension spring (50).

8. Cover according to any one of claims 1 to 7, wherein a second end section (42) of the guide gate (34) defines a relieved state of the slider (70) in which the cover (20) is closed.

9. Cover according to any one of claims 1 to 8, wherein the guide (32) is arranged in a housing (12) of a storage device (10) and the cover (20) is constructed for closing a receiving compartment (14).

10. Cover according to claim 9, wherein the travel path (S₁) for opening the receiving compartment (14) is greater than the travel path (S₂) of the slider (70) between the first end section (40) and the second end section (42).

## Revendications

1. Recouvrement avec un dispositif (18) d'aide au déplacement, présentant au moins un guide (32), un coulisseau (70) et un dispositif de ressort, dans lequel le coulisseau (70) peut être coulissé le long du guide (32) et est relié au dispositif de ressort, **caractérisé en ce que**
- le dispositif (18) d'aide au déplacement présente une coulisse de guidage (34) s'étendant au moins en partie le long du guide (32),
- le coulisseau (70) présente un ensemble entraîneur et au moins un tourillon de guidage (80 ; 82),
- l'au moins un tourillon de guidage (80; 82) est monté de manière à pouvoir coulisser dans la coulisse de guidage (34) et la coulisse de guidage (34) présente une première section d'extrémité (40), qui définit une position d'enclenchement du coulisseau (70),
- le coulisseau (70) est tendu par l'intermédiaire du dispositif de ressort dans la position d'enclenchement,
- le recouvrement (20) peut être déplacé au moins en partie par l'intermédiaire de l'ensemble entraîneur,
- le coulisseau (70) peut être amené dans la position d'enclenchement et hors de la position d'enclenchement par l'intermédiaire du recouvrement (20), et
- la réalisation de la coulisse de guidage (34) permet que le coulisseau (70) ne reste plus en contact avec l'entraîneur (22) dans la première section d'extrémité (40) une fois la position d'enclenchement atteinte.

2. Recouvrement selon la revendication 1, présentant un dispositif de freinage, lequel freine un déplacement du coulisseau (70) par le dispositif de ressort.

3. Recouvrement selon la revendication 2, dans lequel le dispositif de freinage est disposé dans la zone du guide (32).

4. Recouvrement selon la revendication 2 ou 3, dans lequel le dispositif de freinage présente un cylindre de freinage (60).

5. Recouvrement selon l'une quelconque des revendications 1 à 4, dans lequel le recouvrement (20) présente un entraîneur (22) et l'ensemble entraîneur présente un tourillon d'appui (76) avec une inclinaison (78).

6. Recouvrement selon l'une quelconque des revendications 1 à 5, dans lequel la coulisse de guidage (34) présente une première section (36) s'étendant sensiblement de manière parallèle par rapport à la direction de déplacement du recouvrement (20) et une deuxième section (38) s'étendant sensiblement de manière orthogonale par rapport à la première section (36), laquelle présente la position d'enclenchement.

7. Recouvrement selon l'une quelconque des revendications 1 à 6, dans lequel le dispositif de ressort présente au moins un ressort de traction (50).

8. Recouvrement selon l'une quelconque des revendications 1 à 7, dans lequel une deuxième section d'extrémité (42) de la coulisse de guidage (34) définit un état détendu du coulisseau (70), dans lequel le recouvrement (20) est fermé.

9. Recouvrement selon l'une quelconque des revendications 1 à 8, dans lequel le guide (32) est disposé dans un boîtier (12) d'un dispositif de stockage (10) et le recouvrement (20) est réalisé pour fermer un compartiment de logement (14).

10. Recouvrement selon la revendication 9, dans lequel la distance parcourue (S₁) pour ouvrir le compartiment de logement (14) est plus grande que la distance parcourue (S₂) du coulisseau (70) entre la première section d'extrémité (40) et la deuxième section d'extrémité (42).
